# EUROPÄISCHE PATENTSCHRIFT

(11) **EP 2 913 540 B1**
(45) Veröffentlichungstag und Bekanntmachung des Hinweises auf die Patenterteilung: **02.05.2018**
(21) Anmeldenummer: 15153111.8
(22) Anmeldetag: 29.01.2015
(51) Int. Cl.: F16B 21/18, F16C 35/067, F16H 57/023, F16C 19/54, F16C 35/04

(54) **Sprengring zum Einsetzen in eine Nut, insbesondere zur axialen Sicherung eines Wälzlageraußenrings in einer Gehäusewand eines Getriebes, Herstellungsverfahren für den Sprengring und Verfahren zum Einbau des Lagers in die Gehäusewand**
Circlip for insertion in a groove, in particular to mount the outer ring of a rolling bearing in the casing wall of a gearbox, method for producing the circlip and method of mounting the bearing in the casing wall
Bague annulaire ouverte formant ressort insérée dans une gorge, notamment pour empêcher le mouvement axial d'une bague extérieure d'un roulement dans la paroi d'une boîte de vitesse, procédé de fabrication de la bague ouverte et procédé de montage du roulement dans la paroi de carter

(30) Priorität: 11.02.2014 DE 102014101645
(43) Veröffentlichungstag der Anmeldung: 02.09.2015
(73) Patentinhaber: GETRAG B.V. & Co. KG, 74199 Untergruppenbach (DE)
(72) Erfinder: Nollenberger, Frank, 74354 Besigheim (DE)
(74) Vertreter: Witte, Weller & Partner Patentanwälte mbB

(56) Entgegenhaltungen:
- DE-A1- 10 236 618
- DE-A1- 19 730 749
- DE-A1-102004 052 105
- DE-A1-102006 061 408
- DE-A1-102011 003 323
- DE-U1-202012 102 395
- DE-U1-202014 100 535
- JP-A- 2004 068 850
- JP-A- 2008 115 997
- JP-A- 2009 133 376
- JP-A- 2009 150 463
- JP-A- 2013 113 305
- JP-U- H02 116 009
- JP-U- S53 150 349
- JP-U- S54 152 837
- US-A- 2 051 704
- US-A1- 2008 053 270
- US-A1- 2008 111 377

## Beschreibung

Die vorliegende Erfindung betrifft eine Lageranordnung, insbesondere zum Lagern einer Welle an einem Lagerträger eines Kraftfahrzeugantriebsstranges, mit einem Lagerträger, der einen Lagersitz mit einer Lagersitz-Radialnut aufweist, mit einem Wälzlager, das an einem Lagerring eine Lager-Radialnut aufweist und das in den Lagersitz eingesetzt ist, und mit einem Axialsicherungsring, der in die Lagersitz-Radialnut und in die Lager-Radialnut eingreift, um das Wälzlager axial in Bezug auf den Lagerträger zu sichern, wobei der Axialsicherungsring als offener Ring mit radial vorstehenden Laschen ausgebildet ist.

Schließlich betrifft die vorliegende Erfindung ein Verfahren zum Herstellen einer Lageranordnung.

Zur axialen Sicherung von Wälzlagern, die beispielsweise zur Lagerung einer Welle an einem Gehäuse eines Abschnittes eines Kraftfahrzeugantriebsstranges dienen, wie beispielsweise eines Getriebes, sind eine Vielzahl von Lösungen bekannt.

Bei einer derartigen Lösung kann die Welle an ihrem axialen Ende ein Innen-gewinde aufweisen, wobei in das Innengewinde eine Hohlschraube eingeschraubt wird, um dass Wälzlager an der Welle axial zu sichern. Diese Ausführungsform ist vergleichsweise robust und benötigt nur vergleichsweise geringen axialen Bauraum. Diese Lösung ist jedoch vergleichsweise kostenaufwändig.

Ein weiteres Konzept zur Axialsicherung besteht darin, durch eine Gewindebohrung in einem Gehäusedeckel eine Schraube einzudrehen, die an ihrem Innen-abschnitt ein Halteblech gegen den Gehäusedeckel zieht, das an einer Umfangsnut eines Lagerringes des Wälzlagers eingreift.

Eine weitere Möglichkeit besteht darin, Axialsicherungsringe zu verwenden, die in der Regel als Standard-Sprengringe in einer koaxialen Sprengringnut aufgenommen sind.

Bei Axialsicherungsringen gibt es zudem eine Vielzahl unterschiedlicher Bauformen. Die Axialsicherungsringe können zum einen aus einem Blech ausgestanzt sein. Hierbei können unterschiedlichste Formen des Axialsicherungsringes realisiert werden, einschließlich solcher mit Laschen, ohne Laschen, mit Augen zum Ansetzen von Werkzeugen etc. Auch kann die radiale Breite über den Umfang entweder konstant sein oder unterschiedlich sein.

Eine weitere Möglichkeit besteht darin, die Form des Axialsicherungsringes durch einen Wickelvorgang zu realisieren, wie es beispielsweise aus dem Dokument US-A-1,989,750 bekanntgeworden ist. Derartige Axialsicherungsringe sind sehr kostengünstig herstellbar, die radiale Breite über den Umfang ist hierbei jedoch zwangsweise im Wesentlichen konstant. Dies führt zwar zu sehr günstigen Teilepreisen. Allerdings ergibt sich durch die über den Umfang gleichmäßige Form ein ungünstiges Aufbiegeverhalten, wobei zudem ein hoher Platzbedarf beim Aufbiegen erforderlich ist.

Ein derartiger gewickelter Axialsicherungsring kann beispielsweise aus einem vergüteten Bandmaterial oder aus einem vergüteten Drahtmaterial hergestellt sein.

Auch ist es denkbar, an den Enden eines derartigen offenen gewickelten Axialsicherungsringes Laschen vorzusehen, indem an den Enden ein Stanzvorgang durchgeführt wird. Hierbei können auch Montagelöcher integriert werden. Durch den weiteren Arbeitsschritt führt dies jedoch zu hohen Teilepreisen aufgrund hoher Werkzeugkosten. Auch ergibt sich eine große Spaltmaßtoleranz, da als letzter Fertigungsschritt eine Wärmebehandlung erforderlich ist.

Um Laschen herzustellen, ist es bei einem Axialsicherungsring, der aus einem vergüteten gewickelten Band hergestellt ist, auch möglich, die freien Enden radial abzubiegen und zu beschneiden. Auch dies führt zu vergleichsweise günstigen Teilepreisen bei geringen Werkzeugkosten. Zudem kann eine hohe Präzision erreicht werden, da nach dem Wickeln keine Wärmebehandlung mehr erfolgt. Die Detailauslegung ist aufgrund der Störkontur im Biegeradius jedoch nicht einfach. Gegebenenfalls sind im Bereich der Lagersitz-Radialnut axiale Ausnehmungen vorzusehen.

Sprengringe nach DIN-Norm (auch als so genannte "Seegerringe" bezeichnet) weisen radial vorstehende Laschen und eine radiale Breite auf, die im Bereich der Laschen kleiner ist als in dem den Laschen diametral gegenüberliegenden Bereich. Hierdurch kann das Aufbiegeverhalten deutlich verbessert werden. Allerdings ist der notwendige radiale Bauraum aufgrund der großen Nuttiefen relativ groß. Bei Getrieben mit kurzen Achsabständen kann dies zu Bauraumproblemen führen.

Das Dokument JP 2009 150 463 A offenbart eine Lageranordnung gemäß dem Oberbegriff des Anspruchs 1 und ein zugeordnetes Herstellungsverfahren hierfür.

Das Dokument DE 197 30 749 A zeigt eine exzentrische Nut am Außenring eines Wälzlagers, die zur Aufnahme eines offenen Rings dient. Der offene Ring soll ein Wandern des Außenrings in Umfangsrichtung verhindern.

Vor diesem Hintergrund ist es eine Aufgabe der Erfindung, eine verbesserte Lageranordnung sowie ein verbessertes Verfahren zum Herstellen einer Lageranordnung anzugeben, wobei wenigstens einer der obigen Nachteile vermieden wird.

Diese Aufgabe wird durch eine Lageranordnung mit den Merkmalen des Anspruchs 1 gelöst. Ferner wird die Aufgabe gelöst durch ein Verfahren zum Herstellen einer Lageranordnung mit den Merkmalen des Anspruchs 13.

Bei dem Axialsicherungsring ist es vorteilhaft, wenn die Laschen durch Biegen gegenüber dem Ringabschnitt hergestellt sind, wobei der Axialsicherungsring an seinen axialen Seiten plangeschliffen ist.

Ein Verfahren zum Herstellen eines Axialsicherungsringes beinhaltet vorzugsweise die Schritte, aus einem Draht- oder Bandmaterial einen offenen Ring mit einem Ringabschnitt zu biegen, an dessen Enden jeweils radial vorstehende Laschen ausgebildet sind, wobei eine radiale Breite des Ringabschnittes über dessen Umfang im Wesentlichen konstant ist, und mit dem weiteren Schritt, den offenen Ring an seinen axialen Seiten planzuschleifen, und/oder mit dem weiteren Schritt, die Laschen an ihren freien Enden an eine Kreisform anzupassen, deren Mittelpunkt einem Mittelpunkt des Ringabschnittes entspricht.

Ein solcher Axialsicherungsring kann zum einen kostengünstig hergestellt werden. Insbesondere kann der Axialsicherungsring aus einem vergüteten Draht- oder Bandmaterial hergestellt werden, und zwar durch einen Wickelvorgang. Durch Abbiegen der Laschen kann sich ein Aufwurf im Biegeradius ergeben. Durch das anschließende Planschleifen an den axialen Seiten, zumindest in dem Bereich des Biegeradius, ergibt sich jedoch eine exakte axiale Dicke des Axialsicherungsringes, so dass eine höhere Genauigkeit für die Wellenpositionierung erzielbar ist. Zusätzliche Aussparungen am Gehäuse sind nicht notwendig. Ferner ist der Axialsicherungsring gut magazinierbar.

Durch die radial vorstehenden Laschen ist der Axialsicherungsring zudem prozesssicher und manuell oder maschinell montierbar. Ferner kann eine Verdrehsicherung für den Betrieb realisiert werden. Zudem kann aufgrund der radialen konstanten Breite des Ringabschnittes die Axialsicherung auf radial kleinstem Bauraum umgesetzt werden.

Das Beschneiden des Axialsicherungsringes im Bereich der freien Enden der Laschen kann beispielsweise durch Stanzen erfolgen.

Die axiale Dicke des Axialsicherungsringes ist vorzugsweise konstant über den gesamten Umfang. Generell ist es jedoch auch denkbar, den Axialsicherungsring keilförmig auszubilden, um einen axialen Toleranzausgleich zu erzielen.

Sofern ein Stanzen der Enden der radial vorstehenden Laschen erfolgt, kann in einem solchen Stanzvorgang auch eine beliebige Form der radial vorstehenden Laschen erzeugt werden.

Der Axialsicherungsring ist zur Sicherung eines Wälzlagers an einer Welle geeignet, kann jedoch auch als Wellensicherungsring oder Bohrungssicherungsring realisiert werden.

Vorzugsweise stehen die Laschen radial nach außen vor. In diesem Fall wird der Axialsicherungsring vorzugsweise aus einem Grundzustand elastisch aufgebogen, um beispielsweise einen Lagersitz freizugeben. Generell ist es jedoch auch denkbar, einen Axialsicherungsring mit radial nach innen vorstehenden Laschen vorzusehen, in welchem Fall der Axialsicherungsring aus einem Grundzustand zusammengebogen wird, um eine zylindrische Außenfläche freizugeben.

Von besonderem Vorzug ist es, wenn der Ringabschnitt an seinem Innenumfang abgeschrägt oder abgerundet ist.

Diese Ausführungsform gilt insbesondere für den Fall, dass die Laschen radial nach außen vorstehen. In diesem Fall kann durch die Abschrägung oder Abrundung des Innenumfanges ein sicheres Einfädeln des Innenumfanges in eine Nut erfolgen, nachdem der Axialsicherungsring radial zur Montage oder Demontage aufgebogen worden ist.

Bei einem Axialsicherungsring, der zu Montagezwecken radial zusammengebogen wird, kann eine Abschrägung oder Abrundung auch am Außenumfang ausgebildet sein.

Gemäß einer weiteren bevorzugten Ausführungsform sind die Laschen an ihren freien Enden an eine Kreisform angepasst, deren Mittelpunkt einem Mittelpunkt des Ringabschnittes entspricht.

Diese Maßnahme ermöglicht es auf einfache Weise, nach der Montage zu überprüfen, ob der Axialsicherungsring vollständig eingerastet ist, beispielsweise in eine Lager-Radialnut.

Es versteht sich, dass die Anpassung der freien Enden der Laschen an eine Kreisform für den Zustand gilt, dass der Axialsicherungsring im Wesentlichen entspannt ist, also nicht elastisch verformt ist.

Bei einer solchen Ausgestaltung kann die Überprüfung, ob ein Axialsicherungsring ordnungsgemäß in eine Radialnut eingreift, beispielsweise auch durch automatisierte optische Erfassungssysteme erfolgen.

Der Lagerträger ist vorzugsweise ein Gehäuse eines Abschnittes eines Kraftfahrzeug-antriebsstranges, wie beispielsweise ein Getriebegehäuse.

Gemäß einer besonders bevorzugten Ausführungsform ist der Lagerträger ein Gehäuse, das an einem axialen Ende einen Gehäusedeckel aufweist, an dessen Innenseite der Lagersitz ausgebildet ist.

Der Gehäusedeckel ist dabei vorzugsweise einstückig mit einem im Wesentlichen zylindrischen Abschnitt des Gehäuses ausgebildet, so dass das Gehäuse nach der Art eines Topfgehäuses ausgebildet ist.

Ein derartiges Topfgehäuse weist an einem gegenüberliegenden axialen Ende eine Öffnung auf, über die der Axialsicherungsring einführbar und in die Lagersitz-Radialnut einsetzbar ist. Ferner kann über eine derartige Gehäuseöffnung das Wälzlager eingeführt werden, das axial in Bezug auf das Gehäuse zu sichern ist.

Gemäß einer besonders bevorzugten Ausführungsform ist der Lagerträger ein Gehäuse mit einem Gehäusedeckel, wobei in dem Gehäusedeckel eine Montageöffnung ausgebildet ist, die so ausgebildet ist, dass ein Zugriff auf die Laschen des Axialsicherungsringes über die Montage-öffnung ermöglicht ist, um den Axialsicherungsring zum Zwecke der Montage oder Demontage des Wälzlagers elastisch zu verformen.

Obgleich also der Axialsicherungsring beispielsweise über eine Gehäuseöffnung eingeführt und in die Lagersitz-Radialnut eingesetzt wird, erfolgt das elastische Verformen des Axialsicherungsringes nicht über die Gehäuseöffnung sondern über eine Montageöffnung in dem Gehäusedeckel. Hierdurch kann die Lageranordnung effizient hergestellt werden.

Bei dem erfindungsgemäßen Verfahren ist es ferner bevorzugt, wenn der Axialsicherungsring als offener Ring mit einem Ringabschnitt ausgebildet ist, an dessen Enden radial vorstehende Laschen vorgesehen sind, wobei nach dem Freigabeschritt über die Montageöffnung anhand der Position der Laschen überprüft wird, ob der Axialsicherungsring ordnungsgemäß in die Lager-Radialnut eingreift.

Ferner ist es vorteilhaft, wenn die Montageöffnung exzentrisch zu einer Achse des Lagersitzes ausgebildet ist.

Hierdurch kann die Montageöffnung zum einen vergleichsweise klein ausgebildet werden, so dass über die Montageöffnung lediglich ein Zugriff auf die Laschen des Axialsicherungsringes möglich ist. Die Festigkeit des Gehäuses wird daher durch die Montageöffnung nicht stark beeinträchtigt. Zudem kann eine exzentrische Montageöffnung auch dazu verwendet werden, um auf eine Mehrzahl von Axialsicherungsringen zuzugreifen, die parallel versetzt angeordnet sind, um Wälzlager für parallele Wellen an dem Gehäuse festzulegen.

Ferner ist es vorteilhaft, wenn an dem Gehäuse wenigstens eine Aussparung für die Laschen des Axialsicherungsringes ausgebildet ist, die radial benachbart zu der Lagersitz-Radialnut ausgebildet ist und sich über einen Umfangsabschnitt erstreckt, der eine Relativbewegung der Laschen in Umfangsrichtung ermöglicht, um den Axialsicherungsring zum Zwecke der Montage oder Demontage des Wälzlagers elastisch zu verformen.

Auch diese Maßnahme trägt dazu bei, dass die Montageöffnung selbst vergleichsweise klein ausgebildet werden kann. Dies gilt insbesondere, wenn der Lagerring elastisch aufgeweitet wird, um den Lagersitz freizugeben. In diesem Fall kann ein Werkzeug an den Laschen angreifen und diese in Umfangsrichtung voneinander weg bewegen, wobei die Laschen in die Aussparung eintreten.

Dabei ist es von besonderem Vorteil, wenn die Aussparung in Umfangsrichtung begrenzt ist, um eine Verdrehsicherung für den Axialsicherungsring einzurichten.

Dies ermöglicht folglich, den Axialsicherungsring immer so zu halten, dass die Laschen sich im Bereich der Montageöffnung befinden, so dass immer eine Montage oder Demontage möglich ist.

Erfindungsgemäß weist der Lagersitz eine Sitzachse auf, wobei die Lagersitz-Radialnut eine Radialnutachse aufweist und wobei die Radialnutachse gegenüber der Sitzachse exzentrisch versetzt ist.

Der exzentrische Versatz der Sitzachse und der Radialnutachse kann dabei so realisiert sein, dass die radiale Tiefe der Lagersitz-Radialnut über den Umfang veränderlich ist.

Demzufolge ist es gemäß einer weiteren bevorzugten Ausführungsform vorgesehen, dass eine radiale Breite eines Ringabschnittes des Axialsicherungsringes über den Umfang im Wesentlichen konstant ist, wobei eine radiale Tiefe der Lagersitz-Radialnut über den Umfang so gewählt ist, dass der Axialsicherungsring bei seiner Verformung zum Zwecke der Montage oder Demontage des Wälzlagers vollständig in der Lagersitz-Radialnut aufgenommen werden kann, um den Lagersitz freizugeben, und/oder an einem Boden der Lagersitz-Radialnut anschlägt, um die Verformung des Axialsicherungsringes zu begrenzen.

Die Lagersitz-Radialnut weist dabei vorzugsweise in jenem Bereich, der den Laschen des Axialringes diametral gegenüberliegt, die geringste radiale Tiefe auf, wobei diese radiale Tiefe der radialen Breite des Axialsicherungsringes entspricht. Über den Umfang hin zu den Laschen des Axialsicherungsringes nimmt die Tiefe der Lagersitz-Radialnut vorzugsweise kontinuierlich zu, so dass ein elastisches Verformen des Axialsicherungsringes möglich ist, um den Lagersitz freizugeben. Die Tiefe der Radialnut ist dabei vorzugsweise so gewählt, dass der Axialsicherungsring nicht überdehnt werden kann.

Gemäß einer weiteren bevorzugten Ausführungsform weist der Lagerträger einen zweiten Lagersitz mit einer zweiten Lagersitz-Radialnut auf, wobei ein zweites Wälzlager, das an einem Lagerring eine zweite Lager-Radialnut aufweist, in den zweiten Lagersitz eingesetzt ist, wobei ein zweiter Axialsicherungsring in die zweite Lagersitz-Radialnut und in die zweite Lager-Radialnut eingreift, um das zweite Wälzlager axial zu sichern

Aufgrund der radial kompakten Bauweise der einzelnen Lagersitz-Radialnuten kann eine derartige Lageranordnung insgesamt radial kompakt ausgebildet werden, wobei ein geringer Achsabstand zwischen dem ersten und dem zweiten Lagersitz realisierbar ist.

Von Vorzug ist es hierbei, wenn der Lagerträger ein Gehäuse mit einem Gehäusedeckel ist, wobei in dem Gehäusedeckel eine Montageöffnung ausgebildet ist, die so ausgebildet ist, dass ein Zugriff auf die Laschen des ersten und des zweiten Axialsicherungsringes über die Montageöffnung ermöglicht ist, um die Axialsicherungsringe zum Zwecke der Montage oder Demontage des ersten und/oder zweiten Wälzlagers elastisch zu verformen.

Ein Werkzeug, das über die Montageöffnung angreift, ist vorzugsweise so ausgebildet, dass beide Axialsicherungsringe gleichzeitig axial verformt werden können und in dieser Position auch gehalten werden können, um anschließend eine Anordnung mit zwei Wellen und daran vormontierten Wälzlagern in axialer Richtung über eine Gehäuseöffnung des Gehäuses in das Gehäuse einschieben zu können.

Nach dem Einsetzen der Wälzlager in die jeweiligen Lagersitze können dann die beiden Axialsicherungsringe freigegeben werden, wobei diese dann aufgrund elastischer Rückverformung in die jeweiligen Lager-Radialnuten der Wälzlager eingreifen. Auch bei dieser Ausführungsform kann über die Montageöffnung anschließend kontrolliert werden, ob beide Axialsicherungsringe ordnungsgemäß in die jeweiligen Lagersitz-Radialnuten eingreifen.

Gemäß einer weiteren bevorzugten Ausführungsform sind die erste und die zweite Lagersitz-Radialnut dabei in axialer Richtung versetzt angeordnet.

Auch diese Maßnahme kann dazu beitragen, dass die Lageranordnung insgesamt in radialer Richtung kompakt ausgebildet werden kann.

Die Axialsicherungsringe können vorzugsweise als Gleichteile ausgebildet werden, wodurch die Teilevielfalt reduziert werden kann.

Die Axialsicherungsringe sind je nach Ausführungsform robust und benötigen einen geringen Platzbedarf, auch beim Aufdehnen, so dass eine Montageöffnung vergleichsweise klein ausgebildet werden kann. Ferner ergibt sich ein günstiger Teilepreis, da ein minimaler Materialeinsatz bei wenigen Bearbeitungsschritten notwendig ist. Ferner ergeben sich in manchen Ausführungsformen geringe Werkzeugkosten, insbesondere dann, wenn der Axialsicherungsring durch Wickeln hergestellt wird. Auch ist es gegebenenfalls vorteilhaft, dass eine einfache Demontage möglich ist, da ein Verdrehen im Betrieb nicht zulässig ist. Ferner kann nach einer Montage eine Abfrage, ob ein sicheres Einrasten erfolgt ist, realisiert werden. Schließlich können die Axialsicherungsringe leicht magaziniert werden.

Die Lagersitz-Radialnuten ermöglichen ein Eintauchen der Laschen bei der Montage, insbesondere durch eine geeignete Aussparung, und verhindern vorzugsweise gleichzeitig ein Mitdrehen (hinsichtlich des zugeordneten Lagerrings des Wälzlagers ist aber ein Verdrehen zum Gehäuse vorzugsweise trotzdem möglich).

Zudem weist die Lagersitz-Radialnut vorzugsweise einen Mittenversatz zur Hauptbohrung auf, wodurch die konstante radiale Breite des Ringabschnittes des Axialsicherungsringes kompensiert wird.

Bei der erfindungsgemäßen Lageranordnung ist vorzugsweise wenigstens einer der folgenden Vorteile realisierbar. Zum einen ist ein Überdehnen des Axialsicherungsringes nicht möglich. Spezielle Aussparungen bzw. Ausfräsungen am Gehäuse ermöglichen ein Eintauchen der Laschen in Umfangsrichtung und damit eine maximale Öffnung des Axialsicherungsringes. Durch eine exzentrische bzw. außermittige Lagersitz-Radialnut wird ein weitestgehend kreisrundes Aufdehnen trotz der über den Umfang im Wesentlichen konstanten radialen Breite des Axialsicherungsringes möglich, wobei dennoch ein extrem kleiner Bauraum möglich ist.

Durch axial versetzte Radialnuten wird eine Kollision der Laschen vermieden, wobei gegebenenfalls ein noch kleinerer Abstand von Hauptachsen möglich ist.

Ein Einführradius durch Schrägen oder Abrundungen vermeidet ein Verkanten bei dem Eingreifen des Axialsicherungsringes aufgrund elastischer Verformung in die zugeordnete Ringnut.

Es sind sowohl eine manuelle Montage mittels eines Werkzeuges als auch eine automatisierte Montage möglich. Es lässt sich eine axiale Anlagefläche an der Radialnut des Gehäuses erzielen, die hinsichtlich der Flächenpressung akzeptabel ist. Durch kreisförmiges Beschneiden der Enden der Laschen ist eine manuelle oder maschinelle Abfrage bzw. Erfassung, ob ein sicheres Einrasten erfolgt ist oder nicht, unabhängig von der Verdrehposition möglich. Denn im entspannten Zustand (im eingerasteten Zustand) sind die zwei Laschen in Umfangsrichtung innerhalb der Aussparung vorzugsweise zumindest begrenzt beweglich.

Die Montageöffnung liegt vorzugsweise im Wesentlichen zwischen zwei Hauptwellenachsen, sofern zwei Axialsicherungsringe verwendet werden. Es ist bei dem Herstellungsverfahren der Lageranordnung ein hoher Automatisierungsgrad möglich. In anderen Ausführungsformen kann die Montage auch manuell erfolgen.

Ausführungsbeispiele der Erfindung sind in der Zeichnung dargestellt und werden in der nachfolgenden Beschreibung näher erläutert. Es zeigen:
- Fig. 1: eine schematische axiale Draufsicht auf einen Axialsicherungsring;
- Fig. 2: eine schematische Schnittansicht entlang der Linie II-II von Fig. 1;
- Fig. 3: eine schematische Längsschnittansicht durch eine Ausführungsform einer erfindungsgemäßen Lageranordnung;
- Fig. 4: eine schematische axiale Draufsicht auf eine weitere Ausführungsform einer erfindungsgemäßen Lageranordnung mit einem Axialsicherungsring im montierten Zustand;
- Fig. 5: eine der Fig. 4 vergleichbare Ansicht mit einem Axialsicherungsring im aufgeweiteten Zustand;
- Fig.6: eine der Fig. 4 vergleichbare Darstellung mit einem Axialsicherungsring, der einseitig nicht vollständig eingerastet ist.
- Fig. 7: eine schematische Längsschnittansicht durch eine weitere Ausführungsform einer erfindungsgemäßen Lageranordnung mit zwei Wälzlagern; und
- Fig. 8: eine schematische Querschnittsansicht einer Lageranordnung, die der Ausführungsform der Fig. 7 entspricht.

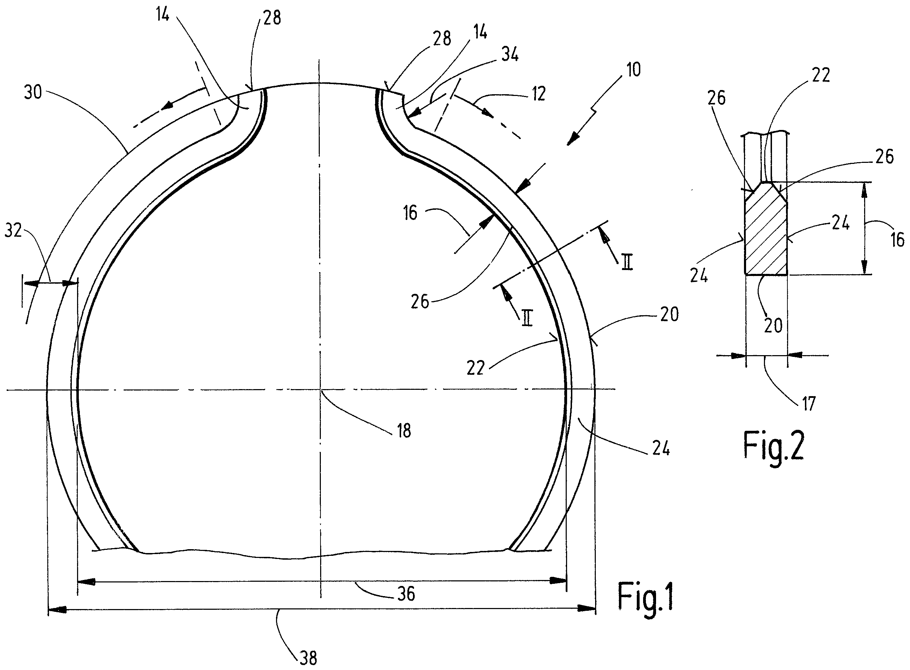

In den Fig. 1 und 2 ist in schematischer Form ein Axialsicherungsring 10 gezeigt. Der Axialsicherungsring 10 ist als offener Ring mit einem Ringabschnitt 12 ausgebildet, der sich über wenigstens 300° erstreckt. An den freien Enden des Ringabschnittes 12 sind Laschen 14 ausgebildet, die radial nach außen vorstehen. Der Ringabschnitt 12 weist über den Umfang eine konstante radiale Breite 16 und über den Umfang eine vorzugsweise konstante axiale Dicke 17 auf. Eine Ringachse bzw. ein Mittelpunkt des Axialsicherungsringes 10 ist bei 18 gezeigt. Der Außenumfang des Ringabschnittes 12 ist mit 20 bezeichnet. Der Innenumfang des Ringabschnittes 12 ist mit 22 bezeichnet. Die axialen Seiten sind mit 24 bezeichnet.

Der Axialsicherungsring ist aus einem vergüteten Bandmaterial durch Wickeln hergestellt, wobei die Laschen 14 durch Biegen gegenüber der Kreisform des Ringabschnittes 12 hergestellt sind. Der Axialsicherungsring 10 ist an seinen axialen Seiten 24 plangeschliffen.

Am Innenumfang 22 ist der Axialsicherungsring 10 mit Abschrägungen 26 versehen. Anstelle von Abschrägungen 26 kann auch eine Abrundung vorgesehen sein. Das Bandmaterial, aus dem der Axialsicherungsring hergestellt ist, ist bereits mit diesen Abschrägungen bzw. dieser Abrundung versehen.

Die freien Enden 28 der Laschen 14 sind so beschnitten, dass sie auf einer Kreisform 30 liegen, wenn der Axialsicherungsring 10 entspannt ist, also nicht elastisch deformiert ist, wie in Fig. 1 dargestellt.

Der Abstand zwischen der Kreisform 30 und dem Innenumfang 22 ist bei 32 dargestellt. Der Biegeradius der Laschen 14 ist bei 34 dargestellt.

In Fig. 1 ist ferner der Innendurchmesser 36 des Axialsicherungsringes 10 im entspannten Zustand dargestellt. Bei 38 ist der Innendurchmesser im aufgeweiteten Zustand dargestellt.

Beim elastischen Aufbiegen des Axialsicherungsringes 10 weicht die Form des Innendurchmessers von einer Kreisform ab. Die genannten Durchmesser 36, 38 beziehen sich auf eine Mittellinie des Axialsicherungsringes 10, die senkrecht zu einer Mittelachse des Axialsicherungsringes 10 hindurchgeht, die durch die Laschen 14 definiert ist.

Der Biegeradius 34 liegt vorzugsweise im Bereich von 2 mm bis 4 mm. Die radiale Breite 16 liegt vorzugsweise im Bereich von 2 mm bis 5 mm. Die axiale Dicke 17 liegt vorzugsweise im Bereich von 1 mm bis 3 mm, vorzugsweise im Bereich von 1,5 mm bis 2 mm.

Der Innendurchmesser 36 liegt vorzugsweise im Bereich von 45 mm bis 60 mm. Das Verhältnis von Innendurchmesser 38 im aufgeweiteten Zustand zum Innendurchmesser 36 im entspannten Zustand liegt vorzugsweise im Bereich von 1,05 bis 1,2, insbesondere im Bereich von 1,09 bis 1,4. Der Innendurchmesser 38 im aufgeweiteten Zustand ist vorzugsweise der maximale Aufweitungsdurchmesser.

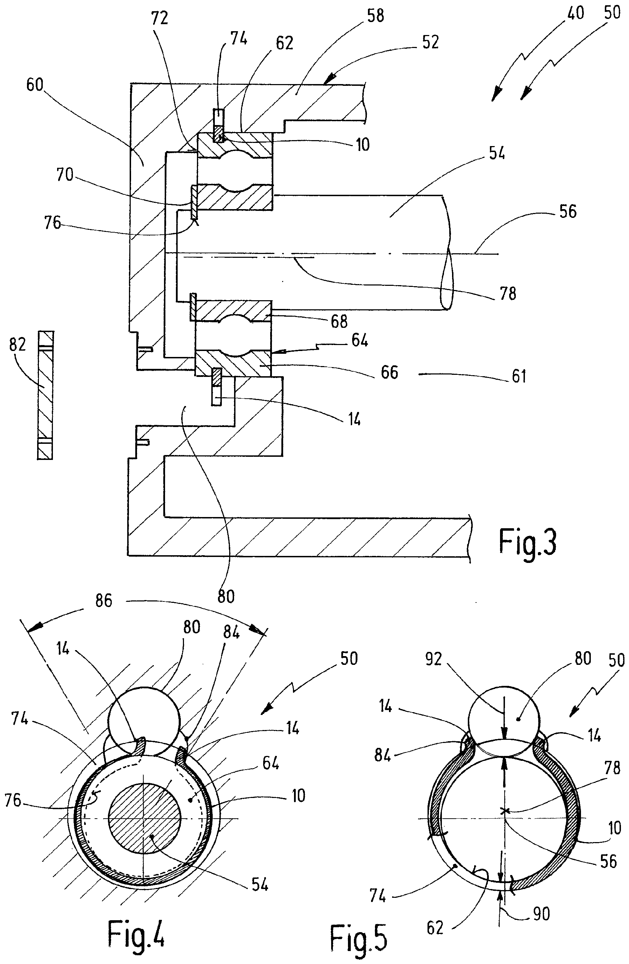

In Fig. 3 ist in schematischer Form ein Teil eines Kraftfahrzeuggetriebes 40 gezeigt, das eine Lageranordnung 50 aufweist.

Die Lageranordnung 50 beinhaltet ein Gehäuse 52 als Lagerträger, wobei das Gehäuse 52 ein Gehäuse des Kraftfahrzeuggetriebes 40 sein kann. Ferner beinhaltet die Lageranordnung 50 eine Welle 54, die drehbar in Bezug auf das Gehäuse 52 gelagert ist. Eine Wellenachse der Welle 54 ist mit 56 bezeichnet.

Das Gehäuse 52 weist eine Gehäusebasis 58 auf, die sich im Wesentlichen in axialer Richtung erstreckt. Ferner beinhaltet das Gehäuse 52 einen Gehäusedeckel 60, der einstückig mit der Gehäusebasis 58 ausgestaltet sein kann, jedoch auch als separates Bauteil ausgebildet sein kann, das mit der Gehäusebasis 58 verbunden ist.

Der Gehäusedeckel 60 ist an einem axialen Ende des Gehäuses 52 ausgebildet. Am gegenüberliegenden axialen Ende weist die Gehäusebasis 58 eine Gehäuseöffnung 61 auf, über die Komponenten des Kraftfahrzeuggetriebes 40 in dem Gehäuse 52 montiert werden können.

An einer Innenseite des Gehäusedeckels 60 oder benachbart hierzu ist ein Lagersitz 62 ausgebildet. Der Lagersitz 62 dient zur Aufnahme eines Außenringes eines Wälzlagers 64, das zum Lagern der Welle 54 ausgebildet ist.

Das Wälzlager 64 weist den Außenring 66 auf, der vorzugsweise in den Lagersitz 62 eingepresst wird, sowie einen Innenring 68, der über eine Axialfixierung 70 an der Welle 54 festgelegt ist.

Der Lagersitz 62 definiert einen Axialanschlag 72 für den Außenring 66. Im Bereich eines Umfangsabschnittes des Lagersitzes 62 ist eine Lagersitz-Radialnut 74 ausgebildet. Ferner beinhaltet der Außenring 66 an seinem Außenumfang eine Lager-Radialnut 76.

Die Lagersitz-Radialnut 74 weist eine Mittelachse 78 auf, die exzentrisch gegenüber der Wellenachse 56 ausgebildet ist, wobei die Wellenachse 56 konzentrisch zu einer Sitzachse des Lagersitzes 62 ausgebildet ist.

In dem Gehäusedeckel 60 ist, exzentrisch zu der Wellenachse 56, eine Montageöffnung 80 ausgebildet. Die Montageöffnung 80 ist über einen Deckel 82 verschließbar.

Zur Montage der Lageranordnung 50 wird zunächst über die Gehäuseöffnung 61 ein Axialsicherungsring 10 in die Lagersitz-Radialnut 74 eingesetzt. Der Axialsicherungsring 10 kann ein Axialsicherungsring sein, wie er in den Fig. 1 und 2 gezeigt ist.

Anschließend wird die Welle 54 mit dem daran mittels der Axialfixierung 70 befestigten Wälzlager 64 über die Gehäuseöffnung 61 in das Gehäuse 52 eingeschoben. Um ein Einsetzen des Außenringes 66 des Wälzlagers 64 in den Lagersitz 62 zu gestatten, wird der Deckel 82 der Montageöffnung 80 abgenommen, und der zuvor in die Lagersitz-Radialnut 74 eingesetzte Axialsicherungsring 10 wird mittels eines Werkzeuges, das über die Montageöffnung 80 eingeführt wird, radial aufgeweitet, so dass der Axialsicherungsring 10 den Lagersitz 62 freigibt. Anschließend kann der Außenring 66 in den Lagersitz 62 axial eingeschoben bzw. eingepresst werden. Schließlich wird der Axialsicherungsring 10 wieder freigegeben, so dass er sich elastisch entspannt und in die Lager-Radialnut 76 eingreift. Die radiale Tiefe der Lager-Radialnut 76 ist so gewählt, dass der Innenumfang 22 vorzugsweise über den gesamten Umfang an dem Boden der Lager-Radialnut 76 anliegt.

Das Einführen des Axialsicherungsringes 10 in die Lager-Radialnut 76 wird durch die Abschrägungen 26 erleichtert. Verkantungen können hierdurch vermieden werden.

Die Laschen 14 des Axialsicherungsringes 10 liegen beide so, dass sie in axialer Projektion im Bereich der Montageöffnung 80 liegen. Dies ermöglicht es, den Axialsicherungsring 10 über die Montageöffnung 80 elastisch aufzuweiten. Ferner wird hierdurch ermöglicht, dass nach dem Freigeben des Axialsicherungsringes 10 über die Lage der Laschen 14 geprüft werden kann, ob dieser sicher in die Lager-Radialnut 76 eingerastet ist.

In Fig. 4 ist die in Fig. 3 gezeigte Ansicht schematisch in einer Axialansicht bzw. Querschnittsansicht gezeigt.

Es ist zu erkennen, dass die Montageöffnung 80 sich tangential mit der Lagersitz-Radialnut 76 überschneidet. Ferner ist in Fig. 4 zu sehen, dass in einem Bereich etwas radial außerhalb der Lagersitz-Radialnut 74 und benachbart zu der Montageöffnung 80 eine Aussparung 84 für die Laschen 14 ausgebildet ist. Die Aussparung 84 erstreckt sich über einen Umfangsabschnitt 86, der ein Aufweiten des Axialsicherungsringes 10 ermöglicht, indem die Laschen 14 in Umfangsrichtung voneinander weg bewegt werden, beispielsweise mittels eines geeigneten Werkzeuges. Der Umfangsabschnitt, über den sich die Aussparung 84 erstreckt, ist in Fig. 4 mit 86 bezeichnet. Der Umfangsabschnitt 86 kann sich beispielsweise über einen Winkelbereich von 45° bis 90° erstrecken, vorzugsweise über einen Winkelbereich von 50° bis 70°.

In Fig. 4 ist der Axialsicherungsring 10 schematisch so dargestellt, dass er in die Lagersitz-Radialnut 74 eingreift. Ferner greift der Axialsicherungsring 10 in die Lagersitz-Radialnut 74 ein, was aufgrund der Darstellung der Fig. 4 jedoch nicht zu sehen ist, da Fig. 4 auch das Wälzlager 64 in einer axialen Draufsicht zeigt. Der Eingriff des Axialsicherungsringes 10 in die Lager-Radialnut 76 ist in Fig. 4 lediglich schematisch gestrichelt angedeutet.

Fig. 5 zeigt eine der Fig. 4 vergleichbare Ansicht, wobei der Axialsicherungsring 10 im aufgeweiteten Zustand gezeigt ist. Es ist zu erkennen, dass der Axialsicherungsring 10 in diesem Zustand den Innenumfang des Lagersitzes 62 vollkommen freigibt, so dass ein axiales Einschieben des Außenringes 66 des Wälzlagers 64 möglich ist. Die Laschen 14 befinden sich dabei an den in Umfangsrichtung gegenüberliegenden Enden der Aussparung 84.

In Fig. 5 ist ferner zu erkennen, dass die radiale Tiefe der Lagersitz-Radialnut 74 über den Umfang nicht durchgehend einheitlich ist. Stattdessen ist die radiale Tiefe der Lagersitz-Radialnut 74 an einem den Laschen 14 diametral gegenüberliegenden Ende am kleinsten, wie es in Fig. 5 bei 90 dargestellt ist. Die radiale Tiefe 90 nimmt über den Umfang zu den beiden Laschen hin jeweils kontinuierlich zu und hat ihre größte radiale Tiefe in einem Bereich mittig zwischen den Umfangsenden der Aussparung 84, wie es in Fig. 5 bei 92 dargestellt ist. Da die Montageöffnung 80 die Lagersitz-Radialnut 74 in diesem Bereich schneidet, ist dort keine Lagersitz-Radialnut 74 mehr vorhanden. Die Darstellung der Fig. 5 dient insoweit lediglich der Verdeutlichung, dass die radiale Tiefe von dem Punkt 90 bis hin zu dem diametral gegenüberliegenden Punkt 92 kontinuierlich zunimmt.

Hierdurch ist es möglich, bei einem Axialsicherungsring mit konstanter radialer Breite 16 eine Aufweitung zu realisieren, die zum einen den Lagersitz 62 vollständig freigibt. Zum anderen wird durch die Aussparungen 84 und/oder durch den Boden der Lagersitz-Radialnut 74 gewährleistet, dass der Axialsicherungsring 10 nur bis zu seiner maximalen Aufweitung aufgedehnt werden kann, die in Fig. 1 mit 38 bezeichnet ist.

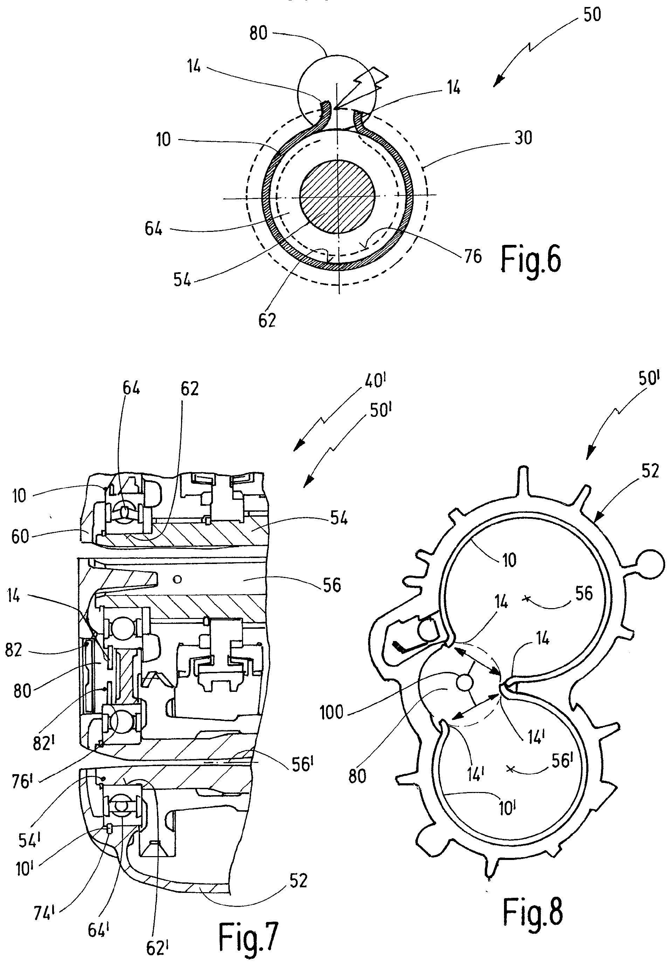

Fig. 6 zeigt eine der Fig. 4 vergleichbare Darstellung, wobei nach dem Einschieben des Wälzlagers 64 in den Lagersitz 62 und nach Freigabe des Axialsicherungsringes 10 dieser nicht ordnungsgemäß in die Lager-Radialnut 76 eingerastet ist. Genauer ist der Axialsicherungsring 10 im Bereich von einer seiner Laschen nicht vollständig in die Lager-Radialnut 76 eingerastet, so dass die eine Lasche 14 gegenüber einer Kreisform 30 vorsteht, die einen ordnungsgemäßen Sitz des Axialsicherungsringes 10 in der Lager-Radialnut 76 anzeigt. Dies ist durch einen Pfeil in Fig. 6 kenntlich gemacht.

Eine derartige Lage kann über die Montageöffnung 80 auf einfache Weise kontrolliert werden, sei es durch einen Monteur oder durch automatisierte optische Erfassungsmittel.

Dies ist insbesondere deswegen möglich, weil die freien Enden 28 der Laschen 14 des Axialsicherungsringes 10 im entspannten Zustand auf einer Kreisform 30 liegen, wie es in Fig. 1 gezeigt ist, so dass eine derartige automatisierte Erfassung auch dann möglich ist, wenn sich der Axialsicherungsring 10 in unterschiedlichen Drehpositionen befindet (im Rahmen der Beweglichkeit der Laschen 14 im entspannten Zustand innerhalb des Umfangsabschnittes 86 der Aussparung 84).

In den Fig. 7 und 8 ist eine weitere Ausführungsform eines Kraftfahrzeuggetriebes 40' dargestellt, das eine Lageranordnung 50' aufweist. Die Lageranordnung 50' entspricht hinsichtlich Aufbau und Funktionsweise generell der Lageranordnung 50 der Fig. 1 bis 6. Gleiche Elemente sind daher durch gleiche Bezugszeichen gekennzeichnet. Im Folgenden werden im Wesentlichen die Unterschiede erläutert.

Die Lageranordnung 50' weist einen Gehäusedeckel 60 auf, an dem neben dem Lagersitz 62 ein zweiter, parallel versetzter Lagersitz 62' ausgebildet ist. Ferner beinhaltet die Lageranordnung 50' eine weitere Welle 54', an der mittels einer nicht näher bezeichneten Axialfixierung ein weiteres Wälzlager 64' festgelegt ist. Ferner beinhaltet die Lageranordnung 50' einen weiteren Axialsicherungsring 10', der in eine Lagersitz-Radialnut 74 im Bereich des weiteren Lagersitzes 62' eingreift, und der weitere Axialsicherungsring 10' greift zum einen in diese Lagersitz-Radialnut 74' als auch in eine Lager-Radialnut 76' des weiteren Wälzlagers 64' ein.

Die Montageöffnung 80 ist zwischen den zwei Wellenachsen 56, 56' angeordnet, wie es auch in Fig. 8 zu erkennen ist.

Die zwei Axialsicherungsringe 10, 10' sind dabei so angeordnet, dass ihre Laschen 14, 14' im Bereich der Montageöffnung 80 liegen. In Fig. 8 sind die beiden Axialsicherungsringe 10, 10' im aufgeweiteten Zustand gezeigt. In beiden Fällen ist im Bereich der Lagersitz-Radialnuten 74 auch jeweils eine geeignete Aussparung 84 vorgesehen, was in Fig. 8 ebenfalls zu erkennen ist.

Zum Montieren der Getriebekomponenten einschließlich der Wellen 54, 54' und der daran fixierten Wälzlager 64, 64' werden die zwei Axialsicherungsringe 10, 10' gleichzeitig aufgeweitet, und zwar mittels eines in Fig. 8 schematisch angedeuteten Werkzeuges 100. Nach dem Einsetzen der Wälzlager 64, 64' in die jeweiligen Lagersitze 62, 62' werden die Axialsicherungsringe 10, 10' von dem Werkzeug 100 freigegeben, so dass sie in die jeweiligen Lager-Radialnuten 76, 76' einrasten, und zwar jeweils so, wie es in den Fig. 4 und 5 dargestellt ist.

Generell ist es möglich, über eine derartige Montageöffnung 80 auch noch weitere Axialsicherungsringe zu bedienen, beispielsweise bei einem Getriebe mit drei Wellen.

Ferner ist es möglich, dass die Lagersitz-Radialnuten 74, 74' in axialer Richtung versetzt zueinander angeordnet sind, was in Fig. 7 nur leicht angedeutet ist. Der Versatz kann jedoch auch so sein, dass die Axialsicherungsringe 10, 10' in axialer Richtung voneinander beabstandet sind. Dies kann ein individuelles Aufweiten der Axialsicherungsringe 10, 10' erleichtern. Ferner kann hierdurch verhindert werden, dass sich die Laschen 14, 14' der zwei Axialsicherungsringe 10, 10' beim Aufweiten gegenseitig behindern.

Anstelle einer gleichzeitigen Aufweitung der Axialsicherungsringe 10, 10' mittels eines Werkzeuges 100 können die Wellen 54, 54' mit den daran festgelegten Wälzlagern 64, 64' auch nacheinander montiert werden, wozu die jeweiligen Axialsicherungsringe 10, 10' jeweils nacheinander aufgeweitet werden.

Die optische Inspektion des ordnungsgemäßen Sitzes der Axialsicherungsringe 10, 10' kann in einem Schritt über die Montageöffnung 80 erfolgen.

Nach dieser Überprüfung kann der Deckel 82' der Montageöffnung 80 wieder montiert werden, um das Gehäuse 52 wieder fluiddicht abzudichten.

## Patentansprüche

1. Lageranordnung (50), insbesondere zum Lagern einer Welle (54) an einem Lagerträger (52) eines Kraftfahrzeugantriebsstranges (40), mit
- einem Lagerträger, der einen Lagersitz (62) mit einer Lagersitz-Radialnut (74) aufweist,
- einem Wälzlager (64), das an einem Lagerring (66) eine Lager-Radialnut (76) aufweist und das in den Lagersitz (62) eingesetzt ist,
- einem Axialsicherungsring (10), der in die Lagersitz-Radialnut (74) und in die Lager-Radialnut (76) eingreift, um das Wälzlager (64) axial in Bezug auf den Lagerträger (52) zu sichern, wobei der Axialsicherungsring (10) als offener Ring mit radial vorstehenden Laschen (14) ausgebildet ist,
**dadurch gekennzeichnet, dass**
der Lagersitz (62) eine Sitzachse (56) aufweist und die Lagersitz-Radialnut (74) eine Radialnutachse (78) aufweist, wobei die Radialnutachse (78) gegenüber der Sitzachse (56) exzentrisch versetzt ist.

2. Lageranordnung nach Anspruch 1, **dadurch gekennzeichnet, dass** der Axialsicherungsring (10) als offener flacher Ring mit einem Ringabschnitt (12) ausgebildet ist, an dessen Enden jeweils radial vorstehende Laschen (14) vorgesehen sind, wobei die radiale Breite (16) des Ringabschnittes (12) über den Umfang im Wesentlichen konstant ist, wobei die Laschen (14) durch Biegen gegenüber dem Ringabschnitt (12) hergestellt sind und wobei der Axialsicherungsring (10) an seinen axialen Seiten (24) plangeschliffen ist.

3. Lageranordnung nach Anspruch 2, **dadurch gekennzeichnet, dass** der Ringabschnitt (12) an seinem Innenumfang (22) abgeschrägt oder abgerundet ist.

4. Lageranordnung nach einem der Ansprüche 1 - 3, **dadurch gekennzeichnet, dass** der Axialsicherungsring (10) als offener flacher Ring mit einem Ringabschnitt (12) ausgebildet ist, an dessen Enden jeweils radial vorstehende Laschen (14) vorgesehen sind, wobei die radiale Breite (16) des Ringabschnittes (12) über den Umfang im Wesentlichen konstant ist, und wobei die Laschen an ihren freien Enden an eine Kreisform (30) angepasst sind, die am Mittelpunkt einem Mittelpunkt (18) des Ringabschnittes (12) entspricht.

5. Lageranordnung nach einem der Ansprüche 1 - 4, **dadurch gekennzeichnet, dass** der Lagerträger ein Gehäuse (52) ist, das an einem axialen Ende einen Gehäusedeckel (60) aufweist, an dessen Innenseite der Lagersitz (62) ausgebildet ist.

6. Lageranordnung nach einem der Ansprüche 1 - 5, **dadurch gekennzeichnet, dass** der Lagerträger ein Gehäuse (52) mit einem Gehäusedeckel (60) ist, wobei in dem Gehäusedeckel (60) eine Montageöffnung (80) ausgebildet ist, die so ausgebildet ist, dass ein Zugriff auf die Laschen (14) des Axialsicherungsringes (10) über die Montageöffnung (80) ermöglicht ist, um den Axialsicherungsring (10) zum Zwecke der Montage oder Demontage des Wälzlagers (64) elastisch zu verformen.

7. Lageranordnung nach Anspruch 6, **dadurch gekennzeichnet, dass** die Montageöffnung (80) exzentrisch zu einer Achse des Lagersitzes (62) ausgebildet ist.

8. Lageranordnung nach Anspruch 6 oder 7, **dadurch gekennzeichnet, dass** an dem Gehäuse (52) wenigstens eine Aussparung (84) für die Laschen (14) des Axialsicherungsringes (10) ausgebildet ist, die radial benachbart zu der Lagersitz-Radialnut (74) ausgebildet ist und sich über einen Umfangsabschnitt (86) erstreckt, der eine Relativbewegung der Laschen (14) in Umfangsrichtung ermöglicht, um den Axialsicherungsring (10) zum Zwecke der Montage oder Demontage des Wälzlagers (64) elastisch zu verformen, wobei die Aussparung (84) vorzugsweise in Umfangsrichtung begrenzt ist, um eine Verdrehsicherung für den Axialsicherungsring (10) einzurichten.

9. Lageranordnung nach einem der Ansprüche 1 - 8, **dadurch gekennzeichnet, dass** eine radiale Breite (16) eines Ringabschnittes (12) des Axialsicherungsringes (10) über den Umfang im Wesentlichen konstant ist, wobei eine radiale Tiefe (90, 92) der Lagersitz-Radialnut (74) über den Umfang so gewählt ist, dass der Axialsicherungsring (10) bei seiner Verformung zum Zwecke der Montage oder Demontage des Wälzlagers (64) vollständig in der Lagersitz-Radialnut (74) aufgenommen werden kann, um den Lagersitz (62) freizugeben, und/oder an einem Boden der Lagersitz-Radialnut (74) anschlägt, um die Verformung des Axialsicherungsringes (10) zu begrenzen.

10. Lageranordnung nach einem der Ansprüche 1 bis 9, **dadurch gekennzeichnet, dass** der Lagerträger (52) einen zweiten Lagersitz (62') mit einer zweiten Lagersitz-Radialnut (74') aufweist, wobei ein zweites Wälzlager (64'), das an einem Lagerring eine zweite Lager-Radialnut (76') aufweist, in den zweiten Lagersitz (62') eingesetzt ist, wobei ein zweiter Axialsicherungsring (10') in die zweite Lagersitz-Radialnut (74') und in die zweite Lager-Radialnut (76') eingreift, um das zweite Wälzlager (64') axial zu sichern.

11. Lageranordnung nach Anspruch 10, wobei der Lagerträger ein Gehäuse (52) mit einem Gehäusedeckel (60) ist, wobei in dem Gehäusedeckel (60) eine Montageöffnung (80) ausgebildet ist, die so ausgebildet ist, dass ein Zugriff auf die Laschen (14, 14') des ersten und des zweiten Axialsicherungsringes (10, 10') über die Montageöffnung (80) ermöglicht ist, um die Axialsicherungsringe (10, 10') zum Zwecke der Montage oder Demontage des ersten und/oder zweiten Wälzlagers (64, 64') elastisch zu verformen.

12. Lageranordnung nach Anspruch 10 oder 11 **dadurch gekennzeichnet, dass** die erste und die zweite Lagersitz-Radialnut (74, 74') in axialer Richtung versetzt angeordnet sind.

13. Verfahren zum Herstellen einer Lageranordnung (50) mit einem Lagerträger, der einen Lagersitz (62) mit einer Lagersitz-Radialnut (74) aufweist, mit einem Wälzlager (64), das an einem Lagerring (66) eine Lager-Radialnut (76) aufweist und das in den Lagersitz (62) eingesetzt ist, mit einem Axialsicherungsring (10), der in die Lagersitz-Radialnut (74) und in die Lager-Radialnut (76) eingreift, um das Wälzlager (64) axial in Bezug auf den Lagerträger (52) zu sichern, wobei der Axialsicherungsring (10) als offener Ring mit radial vorstehenden Laschen (14) ausgebildet ist, wobei der Lagersitz (62) eine Sitzachse (56) aufweist und die Lagersitz-Radialnut (74) eine Radialnutachse (78) aufweist, wobei die Radialnutachse (78) gegenüber der Sitzachse (56) exzentrisch versetzt ist, insbesondere einer Lageranordnung (50) nach einem der Ansprüche 1 - 12, mit den Schritten:
- Bereitstellen eines Gehäuses (52) als Lagerträger, das an einem axialen Ende eine Gehäuseöffnung (61) und an dem anderen axialen Ende einen Gehäusedeckel (60) aufweist, an dessen Innenseite der Lagersitz (62) mit der Lagersitz-Radialnut (74) ausgebildet ist, wobei der Gehäusedeckel (60) eine Montageöffnung (80) aufweist,
- Bereitstellen des Axialsicherungsringes (10), Einführen des Axialsicherungsringes (10) in das Gehäuse (52) über die Gehäuseöffnung (61) und Einsetzen des Axialsicherungsringes (10) in die Lagersitz-Radialnut (74),
- elastisches Verformen des Axialsicherungsringes (10) mittels eines Werkzeuges, das durch die Montageöffnung (80) hindurchgeführt wird, derart, dass der Axialsicherungsring (10) den Lagersitz (62) freigibt,
- Bereitstellen des Wälzlagers (64), das an dem Lagerring (66) die Lager-Radialnut (76) aufweist, Einführen des Wälzlagers (64) in das Gehäuse (52) über die Gehäuseöffnung (61) und Einsetzen des Wälzlagers (64) in den Lagersitz (62), und
- Freigeben des Axialsicherungsringes (10), so dass dieser aufgrund elastischer Rückstellkräfte in die Lager-Radialnut (76) eingreift, um das Wälzlager (64) axial in Bezug auf das Gehäuse (52) zu sichern.

14. Verfahren nach Anspruch 13, wobei der Axialsicherungsring (10) als offener Ring mit einem Ringabschnitt (12) ausgebildet ist, an dessen Enden radial vorstehende Laschen (14) vorgesehen sind, wobei nach dem Freigabeschritt über die Montageöffnung (80) anhand der Position der Laschen (14) überprüft wird, ob der Axialsicherungsring (10) ordnungsgemäß in die Lager-Radialnut (76) eingreift.

## Claims

1. Bearing arrangement (50), in particular for mounting a shaft (54) on a bearing carrier (52) of a motor vehicle drive train (40), having
- a bearing carrier which has a bearing seat (62) with a bearing-seat radial groove (74),
- an anti-friction bearing (64) which has a bearing radial groove (76) on a bearing ring (66) and which is inserted into the bearing seat (62),
- an axial securing ring (10) which engages into the bearing-seat radial groove (74) and into the bearing radial groove (76), in order to secure the anti-friction bearing (64) axially in relation to the bearing carrier (52), the axial securing ring (10) being configured as an open ring with radially projecting lugs (14),
**characterized in that** the bearing seat (62) has a seat axis (56) and the bearing-seat radial groove (74) has a radial groove axis (78), the radial groove axis (78) being offset eccentrically with respect to the seat axis (56)

2. Bearing arrangement according to claim 1, **characterized in that** the axial securing ring (10) is configured as for inserting into a radial groove (74), the axial securing ring (10) being configured as an open flat ring with an annular section (12), at the ends of which in each case radially projecting lugs (14) are provided, the radial width (16) of the annular section (12) being substantially constant over the circumference, wherein the lugs (14) are produced by way of bending with respect to the annular section (12), and the axial securing ring (10) being plane-ground on its axial sides (24).

3. Bearing arrangement according to Claim 2, **characterized in that** the annular section (12) is bevelled or rounded on its inner circumference (22).

4. Bearing arrangement according to any of Claims 1, 2, 3, **characterized in that** the axial securing ring (10) is configured as for inserting into a radial groove (74), the axial securing ring (10) being configured as an open flat ring with an annular section (12), at the ends of which in each case radially projecting lugs (14) are provided, the radial width (16) of the annular section (12) being substantially constant over the circumference, wherein the lugs (14) are adapted at their free ends to a circular shape (30), the center point of which corresponds to a center point (18) of the annular section (12).

5. Bearing arrangement according to any of Claims 1-4, **characterized in that** the bearing carrier is a housing (52) which, at one axial end, has a housing cover (60), on the inner side of which the bearing seat (62) is configured.

6. Bearing arrangement according to any of Claims 1-5, **characterized in that** the bearing carrier is a housing (52) with a housing cover (60), a mounting opening (80) being configured in the housing cover (60), which mounting opening (80) is configured in such a way that access to the lugs (14) of the axial securing ring (10) is made possible via the mounting opening (80), in order to elastically deform the axial securing ring (10) for the purpose of mounting or dismantling the anti-friction bearing (64).

7. Bearing arrangement according to Claim 6, **characterized in that** the mounting opening (80) is configured eccentrically with respect to an axis of the bearing seat (62).

8. Bearing arrangement according to Claim 6 or 7, **characterized in that** at least one cut-out (84) for the lugs (14) of the axial securing ring (10) is configured on the housing (52), which cut-out (84) is configured radially adjacently with respect to the bearing-seat radial groove (74) and extends over a circumferential section (86) which makes a relative movement of the lugs (14) in the circumferential direction possible, in order to elastically deform the axial securing ring (10) for the purpose of mounting or dismantling the anti-friction bearing (64), wherein, preferably, the cut-out (84) is delimited in the circumferential direction, in order to set up an antirotation safeguard for the axial securing ring (10).

9. Bearing arrangement according to one of Claims 1-8, **characterized in that** a radial width (16) of an annular section (12) of the axial securing ring (10) is substantially constant over the circumference, a radial depth (90, 92) of the bearing-seat radial groove (74) over the circumference being selected in such a way that, during its deformation for the purpose of mounting or dismantling the anti-friction bearing (64), the axial securing ring (10) can be received completely in the bearing-seat radial groove (74), in order to release the bearing seat (62), and/or bears against a bottom of the bearing-seat radial groove (74), in order to limit the deformation of the axial securing ring (10).

10. Bearing arrangement according to one of Claims 1-9, **characterized in that** the bearing carrier (52) has a second bearing seat (62') with a second bearing-seat radial groove (74'), a second anti-friction bearing (64') which has a second bearing radial groove (76') on a bearing ring being inserted into the second bearing seat (62'), a second axial securing ring (10') engaging into the second bearing-seat radial groove (74') and into the second bearing radial groove (76'), in order to axially secure the second anti-friction bearing (64').

11. Bearing arrangement according to Claim 10, the bearing carrier being a housing (52) with a housing cover (60), a mounting opening (80) being configured in the housing cover (60), which mounting opening (80) is configured in such a way that access to the lugs (14, 14') of the first and the second axial securing ring (10, 10') is made possible via the mounting opening (80), in order to elastically deform the axial securing rings (10, 10') for the purpose of mounting or dismantling the first and/or second anti-friction bearing (64, 64').

12. Bearing arrangement according to Claim 10 or 11, **characterized in that** the first and the second bearing-seat radial groove (74, 74') are arranged offset in the axial direction.

13. Method for producing a bearing arrangement (50) having a bearing carrier which has a bearing seat (62) with a bearing-seat radial groove (74), having an anti-friction bearing (64) which has a bearing radial groove (76) on a bearing ring (66) and which is inserted into the bearing seat (62), having an axial securing ring (10) which engages into the bearing-seat radial groove (74) and into the bearing radial groove (76), in order to secure the anti-friction bearing (74) axially in relation to the bearing carrier (52), the axial securing ring (10) being configured as an open ring with radially projecting lugs (14), wherein the bearing seat (62) has a seat axis (56) and wherein the bearing-seat radial groove (74) has a radial groove axis (78), the radial groove axis (78) being offset eccentrically with respect to the seat axis (56), in particular a bearing arrangement (50) according to one of Claims 1 to 12, having the steps:
- provision of a housing (52) as bearing carrier, which has a housing opening (61) at one axial end and a housing cover (60) at the other axial end, on the inner side of which housing cover (60) a bearing seat (62) with the bearing-seat radial groove (74) is configured, the housing cover (60) having a mounting opening (80),
- provision of an axial securing ring (10), introduction of the axial securing ring (10) into the housing (52) via the housing opening (61) and insertion of the axial securing ring (10) into the bearing-seat radial groove (74),
- elastic deformation of the axial securing ring (10) by means of a tool which is guided through the mounting opening (80), in such a way that the axial securing ring (10) releases the bearing seat (62),
- provision of an anti-friction bearing (64) which has a bearing radial groove (76) on a bearing ring (66), introduction of the anti-friction bearing (64) into the housing (52) via the housing opening (61) and insertion of the anti-friction bearing (64) into the bearing seat (62), and
- release of the axial securing ring (10), with the result that it engages into the bearing radial groove (76) on account of elastic restoring forces, in order to secure the anti-friction bearing (64) axially in relation to the housing (52).

14. Method according to Claim 13, the axial securing ring (10) being configured as an open ring with an annular section (12), at the ends of which radially projecting lugs (14) are provided, a test being carried out after the release step via the mounting opening (80) using the position of the lugs (14) as to whether the axial securing ring (10) engages correctly into the bearing radial groove (76).

## Revendications

1. Ensemble de palier (50), en particulier pour le montage d'un arbre (54) sur un porte-palier (52) du train d'entraînement (40) d'un véhicule automobile, l'ensemble présentant :
- un porte-palier qui présente un siège (62) de palier doté d'une rainure radiale (74) de siège de palier,
- un palier de roulement (64) qui présente une rainure radiale (76) de palier sur une bague (66) de palier et qui est inséré dans le siège de palier (62),
- une bague (10) de blocage axial qui s'engage dans la rainure radiale (74) de siège de palier et la rainure radiale (76) de palier pour bloquer axialement le palier de roulement (64) sur le porte-palier (52), la bague (10) de blocage axial étant configurée comme bague ouverte dotée de pattes (14) débordant radialement,
**caractérisé en ce que**
le siège de palier (62) présente un axe (56) de siège et la rainure radiale (74) de siège de palier présente un axe (78) de rainure radiale, le axe (78) de rainure radiale étant décentré par rapport à l'axe (56) du siège.

2. Ensemble de palier selon la revendication 1, **caractérisé en ce que** la bague (10) de blocage axial est configurée comme bague plate ouverte dotée d'une partie (12) de bague des extrémités de laquelle sont prévues des pattes (14) débordant radialement, la largeur radiale (16) de la partie (12) de la bague étant essentiellement constante sur toute la périphérie et les pattes (14) étant réalisées par flexion par rapport à la partie (12) de la bague, la bague (10) de blocage axial étant planée sur ses côtés axiaux (24).

3. Ensemble de palier selon la revendication 2, **caractérisé en ce que** la partie (12) de la bague est chanfreinée ou arrondie à sa périphérie intérieure (22).

4. Ensemble de palier selon l'une des revendications 1 à 3, **caractérisé en ce que** le la bague (10) de blocage axial est configurée comme bague plate ouverte dotée d'une partie (12) de bague des extrémités de laquelle sont prévues des pattes (14) débordant radialement, la largeur radiale (16) de la partie (12) de la bague étant essentiellement constante sur toute la périphérie et les pattes étant à leurs extrémités libres adaptées à la forme (30) d'un cercle dont le centre correspond au centre (18) de la partie (12) de la bague.

5. Ensemble de palier selon l'une des revendications 1 à 4, **caractérisé en ce que** le porte-palier est un boîtier (52) qui présente à une extrémité axiale un couvercle (60) de boîtier sur le côté intérieur duquel est formé le siège de palier (62).

6. Ensemble de palier selon l'une des revendications 1 à 5, **caractérisé en ce que** le porte-palier est un boîtier (52) présentant un couvercle (60) de boîtier, une ouverture de montage (80) configurée de manière à permettre un accès aux pattes (14) de la bague (10) de blocage axial par l'intermédiaire de l'ouverture de montage (80) étant formée dans le couvercle (60) du boîtier pour déformer élastiquement la bague (10) de blocage axial en vue du montage ou du démontage du palier de roulement (64).

7. Ensemble de palier selon la revendication 6, **caractérisé en ce que** l'ouverture de montage (80) est décentrée par rapport à un axe du siège (62) du palier.

8. Ensemble de palier selon les revendications 6 ou 7, **caractérisé en ce qu'**au moins une découpe (84) est formée sur le boîtier (52) pour les pattes (14) de la bague (10) de blocage axial radialement au voisinage de la rainure radiale (74) de siège de palier et s'étend sur une partie (86) de la périphérie qui permet un déplacement relatif des pattes (14) dans la direction périphérique pour déformer élastiquement la bague (10) de blocage axial en vue du montage ou du démontage du palier de roulement (64), la découpe (84) étant de préférence limitée dans la direction périphérique pour permettre un blocage en rotation de la bague (10) de blocage axial.

9. Ensemble de palier selon l'une des revendications 1 à 8, **caractérisé en ce que** la largeur radiale (16) d'une partie (12) de la bague de la bague (10) de blocage axial est essentiellement constante sur toute la périphérie, la profondeur radiale (90, 92) de la rainure radiale (74) de siège de palier sur la périphérie étant sélectionnée de telle sorte que la bague (10) de blocage axial puisse être reprise complètement dans la rainure radiale (74) de siège de palier lorsqu'elle est déformée en vue du montage ou du démontage du palier de roulement (64), pour libérer le siège (62) de palier, et/ou vient buter contre le fond de la rainure radiale (74) de siège de palier pour limiter la déformation de la bague (10) de blocage axial.

10. Ensemble de palier selon l'une des revendications 1 à 9, **caractérisé en ce que** le porte-palier (52) présente un deuxième siège (62') de palier doté d'une deuxième rainure radiale (74') de siège de palier, un deuxième palier de roulement (64') qui présente sur une bague de palier une deuxième rainure radiale (76') de palier est inséré dans le deuxième siège (62') de palier, une deuxième bague (10') de blocage axial s'engageant dans la deuxième rainure radiale (74') de siège de palier et la deuxième rainure radiale (76') de palier pour bloquer axialement le deuxième palier de roulement (64').

11. Ensemble de palier selon la revendication 10, dans lequel le porte-palier est un boîtier (52) présentant un couvercle (60) de boîtier, une ouverture de montage (80) configurée de manière à permettre un accès aux pattes (14) de la bague (10) de blocage axial par l'intermédiaire de l'ouverture de montage (80) étant formée dans le couvercle (60) du boîtier pour déformer élastiquement la bague (10) de blocage axial en vue du montage ou du démontage du premier et/ou du deuxième palier de roulement (64, 64').

12. Ensemble de palier selon les revendications 10 ou 11, **caractérisé en ce que** la première et la deuxième rainures radiales (74, 74') de siège de palier sont décalées dans la direction axiale.

13. Procédé de fabrication d'un ensemble de palier (50) présentant un porte-palier qui présente un siège (62) de palier doté d'une rainure radiale (74) de siège de palier, un palier de roulement (64) qui présente une rainure radiale (76) de palier sur une bague (66) de palier et qui est inséré dans le siège de palier (62), une bague (10) de blocage axial qui s'engage dans la rainure radiale (74) de siège de palier et la rainure radiale (76) de palier pour bloquer axialement le palier de roulement (64) sur le porte-palier (52), la bague (10) de blocage axial étant configurée comme bague ouverte dotée de pattes (14) débordant radialement, le siège de palier (62) présentant un axe (56) de siège et la rainure radiale (74) de siège de palier présente un axe (78) de rainure radiale, l'axe (78) de la rainure radiale étant décentré par rapport à l'axe (56) du siège, notamment un ensemble de palier (60) selon l'une des revendications 1 à 12, le procédé présentant les étapes qui consistent à :
- préparer un boîtier (52) servant de porte-palier, le boîtier présentant à une extrémité axiale une ouverture (61) de boîtier et à l'autre extrémité axiale un couvercle de boîtier (60) sur le côté intérieur duquel est formé le siège (62) de palier doté de la rainure radiale (74) de siège de palier, le couvercle (60) du palier présentant une ouverture de montage (80),
- préparer la bague (10) de blocage axial, insérer la bague (10) de blocage axial dans le boîtier (52) par l'ouverture (61) du boîtier et insérer la bague (10) de blocage axial dans la rainure radiale (74) de siège de palier,
- déformer élastiquement la bague (10) de blocage axial au moyen d'un outil qui est passé par l'ouverture de montage (80) de telle sorte que la bague (10) de blocage axial libère le siège (62) du palier,
- préparer le palier de roulement (64) qui présente la rainure radiale (76) de palier sur la bague (66) du palier, insérer le palier de roulement (64) dans le boîtier (52) par l'ouverture (61) du boîtier et insérer le palier de roulement (64) dans le siège (62) du palier et
- libérer la bague (10) de blocage axial de telle sorte que celle-ci s'engage dans la rainure radiale (76) de palier sous l'action de forces élastiques de rappel pour bloquer le palier de roulement (64) axialement par rapport au boîtier (52).

14. Procédé selon la revendication 13, dans lequel la bague (10) de blocage axial est configurée comme bague ouverte dotée d'une partie de bague (12) aux extrémités de laquelle sont prévues des pattes (14) débordant radialement, en vérifiant à l'aide de la position de des pattes (14) après l'étape de libération par l'intermédiaire de l'ouverture de montage (80) si la bague (10) de blocage axial s'engage correctement dans la rainure radiale (76) de palier.
